# EUROPEAN PATENT SPECIFICATION

(11) **EP 1 221 035 B1**
(45) Date of publication and mention of the grant of the patent: **23.05.2012**
(21) Application number: 00964997.1
(22) Date of filing: 14.09.2000
(51) Int. Cl.: G01N 21/00, H01J 3/14

(54) **SYSTEM AND METHOD FOR TOMOGRAPHIC IMAGING OF DYNAMIC PROPERTIES OF A SCATTERING MEDIUM**
VORRICHTUNG UND VERFAHREN ZUR TOMOGRAPHISCHEN ABBILDUNG VON DYNAMISCHEN EIGENSCHAFTEN EINES STREUENDEN MEDIUMS
SYSTEME ET PROCEDE D'IMAGERIE TOMOGRAPHIQUE DES PROPRIETES DYNAMIQUES D'UN MILIEU DIFFUSANT

(30) Priority: 14.09.1999 US 153926 P; 15.09.1999 US 154099 P
(43) Date of publication of application: 10.07.2002
(73) Proprietor: THE RESEARCH FOUNDATION OF STATE UNIVERSITY OF NEW YORK, Albany, New York 12201-0009 (US)
(72) Inventor: BARBOUR, Randall, L., Glen Head, NY 11455 (US); SCHMITZ, Christoph, H., Brooklyn, NY 11238 (US)
(74) Representative: Vossius, Corinna
(86) International application number: PCT/US2000/025155
(87) International publication number: WO 2001/020306

(56) References cited:
- GB-A9- 2 311 854
- US-A- 5 820 558
- US-A- 5 994 690
- DATABASE INSPEC [Online] THE INSTITUTION OF ELECTRICAL ENGINEERS, STEVENAGE, GB October 1968 MCCORD W M: 'Laboratory arrangement in a new perspective' Database accession no. 1 & AMERICAN JOURNAL OF PHYSICS USA vol. 36, no. 10, pages 874 - 878 ISSN: 0002-9505

## Description

This invention was made with U.S. Government support under contract number CA-RO166184-02A, awarded by the National Cancer Institute. The U.S. Government has certain rights in the invention.

This application is related to prior U.S. Provisional Patent Application Serial Nos. 60/153,926 filed September 14, 1999, entitled DYNAMIC TOMOGRAPHY IN A SCATTERING MEDIUM and 60/154,099 filed September 15, 1999, entitled DYNAMIC TOMOGRAPHY IN A SCATTERING MEDIUM.

This application is related to copending application serial number "not yet assigned", attorney docket number 0887-4147PC2, filed on the same date as this application, entitled "METHOD AND SYSTEM FOR IMAGING THE DYNAMICS OF SCATTERING MEDIUM" by inventor R. Barbour (hereinafter the "Barbour 4147PC2 application").

This application is also related to copending application serial number "not yet assigned", attorney docket number 0887-4149PC1, filed on the same date as this application, entitled "METHOD AND SYSTEM FOR ENHANCED IMAGING OF A SCATTERING MEDIUM" by inventors R. Barbour and Y Pei (hereinafter the "Barbour 4149PC1 application").

This application is also related to copending application serial number "not yet assigned", attorney docket number 0887-4149PC2, filed on the same date as this application, entitled "IMAGING OF SCATTERING MEDIA USING RELATIVE DETECTOR VALUES" by inventor R. Barbour (hereinafter the "Barbour 4149PC2 application").

### Field of the Invention

The invention relates to a system and method for tomographic imaging of dynamic properties in of a scattering medium, which may have special application to medical imaging, and in particular to systems and methods for tomographic imaging using near infrared energy to image time variations in the optical properties of tissue.

### Background of the Invention

Contrary to imaging methods relying on the use of ionizing radiation and/or toxic/radioactive contrast agents, near infra-red (NIR)-imaging methods bear no known risk of causing harm to the patient. The dose of optical intensity used remains far below the threshold of thermal damage and is therefore safe. In the regime of wavelength/intensity/power used, there are no effects on patient tissue that accumulate with increasing NIR dose due to over-all irradiation time.

The general technology involved in optical tomography is developed and understood, so that, compared to other cross-sectional imaging techniques such as MRI, X-ray CT, and the like, only moderate costs and relatively small-sized devices are required. Optical tomography especially gains from the development of small, economical, yet powerful semiconductor lasers (laser diodes) and the availability of highly integrated, economical off-the-shelf data processing electronics suitable for the application. Moreover, the availability of powerful yet inexpensive computers contributes to the attractiveness of optical tomography since a significant computational effort may be necessary for both image reconstruction and data analysis.

Optical tomography yields insights into anatomy and physiology that are unavailable from other imaging methods, since the underlying biochemical activities of physiological processes almost always leads to changes in tissue optical properties. For example, imaging blood content and oxygenation is of interest. Blood shows prominent absorption spectra in the NIR region and vascular dynamics and blood oxygenation play a major role in physiology/pathology.

However, cross-sectional or volumetric imaging of dynamic features in large tissue structures is not extractable with current optical imaging methods. At present, whereas a variety of methods involving imaging and non-imaging modalities are available for assessing specific features of the vasculature, none of these assess measure dynamic properties based on measures of hemoglobin states. For instance, detailed images of the vascular architecture involving larger vessels (> 1 mm dia.) can be provided using x-ray enhanced contrast imaging or MR angiography. These methods however are insensitive to hemoglobin states and only indirectly provide measures of altered blood flow. The latter is well accomplished, in the case of larger vessels, using Doppler ultrasound, and for near-surface microvessels by laser Doppler measurements, but each is insensitive to variations in tissue blood volume or blood oxygenation. Ultrasound measurements are also limited by their ability to penetrate bone. Other methods are available, (e.g., pulse volume recording, magnetic resonance (MR) BOLD method, radioscintigraphic methods), and each is able to sample, either directly or indirectly, only a portion of the indicated desired measures.

Thus, there is a need for a system and method of data collection providing cross-sectional or volumetric imaging of dynamic features in large tissue structures.

GB2311854 discloses a system and a method for tomographic imaging of a scattering medium comprising multiple energy sources for simultaneous illumination, energy transmitter fibers, detectors, energy receiver fibers, means for separating signals based on modulation frequencies, means for generating a time series of images, and an imaging head.

### SUMMARY OF THE INVENTION

The present invention is defined in the appended claims and provides a system and method for generating an image of dynamic properties in a scattering medium. The system includes energy sources, such as a NIR emitting source, and a detection system to measure received energy. In an exemplary embodiment, the detection system has a means for rapid adjustment of signal gain, and a device for retaining a measured response in order to investigate the dynamic variations in the optical properties of tissues. The detection system further includes at least one means for separating a plurality of signals from the photo-receiver as multiple energy sources are used simultaneously. This simultaneous use of multiple energy sources provides different wavelengths and allows the use of different source locations at the same time.

In one implementation using optical tomographic imaging, a specimen is exposed to TTIR light emitted from laser diode means. Furthermore an imaging head may be utilized that contains means for positioning at least one source location and or at least one detector location with respect to the medium. Each energy detector uses an optical fiber to transmit the received energy. The energy detector is responsive to the energy or light emerging from the specimen. In accordance with the invention, the signal from the detector is selectively enhanced in gain to increase the dynamic measurement range. The method includes separating a plurality of signals generated by multiple energy sources, such as via at least one lock-in amplifier. In addition, the method allows simultaneous measurements of signals produced by the SIR light by means of a sample-and-hold circuit as more than one detector fiber is used.

### BRIEF DESCRIPTION OF THE FIGURES

For a better understanding of the invention, together with the various features and advantages thereof, reference should be made to the following detailed description of the preferred embodiments and to the accompanying drawings wherein:
FIG. 1 is a block diagram of one embodiment of a system according to the invention;
FIG. 2 is a block diagram illustrating one implementation of the system in FIG. 1;
FIG. 3 is a perspective view of a servo-motor apparatus useful to illuminate a number of fiber bundles with a single energy source;
FIG. 4 is a schematic illustration of the disposition for examining human tissue such as a human breast;
FIG. 5 is a photograph of a planar imaging head that is not part of this invention,
FIG. 6 is one source detector arrangement on the imaging head shown in FIG. 5;
FIG. 7 is an illustration of a spherical imaging head useful in practicing the invention;
FIG. 8 is a block diagram of a detector channel useful in practicing the invention;
FIG. 9 is a graphical representation of one implementation of a timing scheme used in the system of FIG.1;
FIG. 10 is a diagram illustrating the sequence of certain events in a multiple channel scheme;
FIG. 11 is a schematic illustration of the physical arrangement of multiple detector channels used in a preferred embodiment of the invention;
FIG. 12 is a circuit diagram of one detector channel used in FIG. 11; and
FIG. 13 is a circuit diagram of one implementation of the lock-in module used in FIG 12.

### DETAILED DESCRIPTION OF THE INVENTION

The objective of the invention is to provide a system and method capable to extract dynamics in properties of a scattering medium. The use of the invention's system and method has several applications including, but not limited to, medical imaging applications. Although the methods described herein focus on tomographic imaging the dynamic properties of hemoglobin states and tissue using optical tomography, with an imaging source generating multiple wavelengths in the NIR region, it is appreciated that the invention is applicable to any medium that is able to scatter the propagating energy from any energy source, including external energy sources such as those sources located outside the medium and/or internal sources such as those energy sources located inside the medium. For example, other media includes, but are not limited to, medium from mammals, botanical life, aquatic life, or invertebrates; oceans or water masses; foggy or gaseous atmospheres; earth strata; industrial materials; man-made or naturally occurring chemicals and the like. Energy sources include, but are not limited to, non-laser optical sources like LED and high-pressure incandescent lamps and lasers sources such as laser diodes, solid state lasers such as titanium-sapphire laser and ruby laser, dye laser and other electromagnetic sources, acoustic energy, acoustic energy produced by optical energy, optical energy, and any combinations thereof.

Similarly the means to detect the signal produced by the energy source is not limited to photodiode implementation discussed in one of the preferred embodiments further described herein. Other detectors can be used with the principles of the present invention for the purpose of tomographic imaging the dynamic properties of a medium. Such detectors include for example, but are not limited to, photo-diodes, PIN diodes (PIN), Avalanche Photodiodes (APD), charge couple device (CCD), charge inductive device (CID), photo-multiplier tubes (PMT), multi-channel plate (MCP),acoustic transducers and the like.

The present invention builds upon previous disclosures in U.S. Patent Nos. 5,137, 355 ("the'355 patent") entitled "Method of Imaging a Random Medium" ("the'355 patent") and 6,081,322 ("the'322 patent") entitled "NIR Clinical Opti-Scan System". Disclosed in these patents is an approach to optical tomography, and the instrumentation required to accomplish the tomography. The modifications in the present invention provide fast data acquisition, and new imaging head designs. Fast data acquisition allows accurate sampling of dynamic features. The modification in the imaging head allows accommodation of different size targets (e.g., breast); the stabilization of the target against motion artifacts; conforming the target to a simple well-defined geometry; and knowledge of source and detector positioning on or about the target. All of-the enumerated features listed above for the imaging head is crucial for accurate image reconstruction.

Additionally, the present invention uses detector circuitry that allows quick adaptation of the measurement range to the signal strength thereby increasing the over-all dynamic range. "Dynamic range" for the purposes of this description means the ratio between the highest and lowest detectable signal. This makes the circuitry suitable for use with source-detector distances that can vary significantly during the data collection, thereby allowing fast data acquisition over wide viewing angles. For instance, we are aware that dynamic features of dense scattering media may be extractable from measurements using a single source and single detector at a fixed distance between each other. Depending on the implementation, such an arrangement could be made using a detector of relatively small dynamic range. Although we are aware of the possible usefulness of such a measurement, our invention allows the measurement of dynamics in optical properties of dense scattering media using source-detector pairs over a wide range of distances (e.g., greater than or about 5 cm). Such full tomographic measurements allow for improved accuracy in image reconstruction.

Depending upon the implementation, it is within the scope of the present invention to include those embodiments using a restricted source detector distance and therefore not requiring fast gain adjustment. For example, in one embodiment, the system of the present invention can also be operated using detector channels of low-dynamic range (e.g., 1:1000) when detector fibers of a fixed distance from the source are being used for the measurement (e.g., the detector opposite the source).

The data collection scheme of the present invention disclosed herein provides time-series of raw data sets that provide useful information about dynamic properties of the scattering medium without any further image reconstruction. For example, by displaying the raw data in a color mapping format, features can be extracted by sole visual inspection. In addition to that, analysis algorithms of various types such as, but not limited to, linear and non-linear time-series analysis or pattern recognition methods can be applied to the series of raw data. The advantage of using these analytical methods is the improved capability to reveal dynamic signatures in the signals.

In another implementation, image reconstruction methods may be applied to the sets of raw data thereby providing time series of cross-sectional images of the scattering medium. For these implementations, analysis methods of various types such as, but not limited to, linear and non-linear time-series analysis, filtering, or pattern recognition methods can be applied. The advantage of using such analysis is the improved extraction of dynamic features and cross-sectional view, thereby increasing diagnostic sensitivity and specificity. These methods are explained in detail in the '355 and '322 patents.

The invention reveals measurements of real-time spatial temporal dynamics. Depending on the implementation, an image of dynamic optical properties of scattering medium such as, but not limited to, the vasculature of the human body in a cross-sectional view is provided. The technology employs low cost, compact instrumentation that uses non-damaging near infrared optical sources and features several alternate imaging heads to permit investigation of a broad range of anatomical sites.

In another implementation, the principles of the present invention can be used in conjunction with contrast agents such as absorbing and fluorescent agents. In another variant, the present invention allows the cross-sectional measurements of changes in optical properties due to variations in temperature. The advantage of this variant is seen, but not restricted to, the use of monitoring cryosurgery.

A system using the modified instrumentation and described methods of the instant invention is capable of producing cross-sectional images of real-time events associated with vascular reactivity in a variety of tissue structures (e.g., limbs, breast, head and neck). Such measurements permit an in-depth analysis of local hemodynamic states that can be influenced by a variety of physiological manipulations, pharmacological agents or pathological conditions. Measurable physiological parameters include identification of local dynamic variations in tissue blood volume, blood oxygenation, estimates of flow rates, and tissue oxygen consumption. It is specifically noted that measurements of several locations on the same medium can be taken. For example, measurements may be taken of the leg and arm areas of a patient at the same time. Correlation of data between the different locations is available using the methods described herein.

The invention also provides both linear and non-linear time series analysis to reveal site specific functionality of the various components of the vascular tree. Thus the response characteristics of the major veins, arteries and structures associated with the microcirculation can be evaluated in response to a range of stimuli.

Fast data collection methods are particularly helpful because there are many disease states with specific influences on the spatial-dynamic properties of vascular responses. Accordingly, it is understood that significantly greater contrast mechanisms are definable, with much greater diagnostic sensitivity. This is accomplished by collecting and evaluating data in the time domain. These results are not available by performing static imaging studies.

The importance of dynamic properties follows directly from an understanding of the well known physiological reactivity of the vascular system. Control of the peripheral vasculature is mediated by neural, humoral and metabolic factors. Neural control is principally through autonomic activity. The details of these properties are well known to many, and can be found in any one of several medical physiology texts. Loss of autonomic control occurs in a variety of disease processes, especially in diabetes. Invariably, this loss of control will adversely influence local perfusion states. The current invention has the capacity to directly evaluate the concept known as vascular sufficiency. This term takes into account the fact that, among its many roles, the vasculature is uniquely responsible for the delivery of essential nutrients to tissue, in particular, oxygen, and for the removal of metabolic waste products. Imbalances between supply and demand lead to relative hypoxic states, which often are clinically significant.

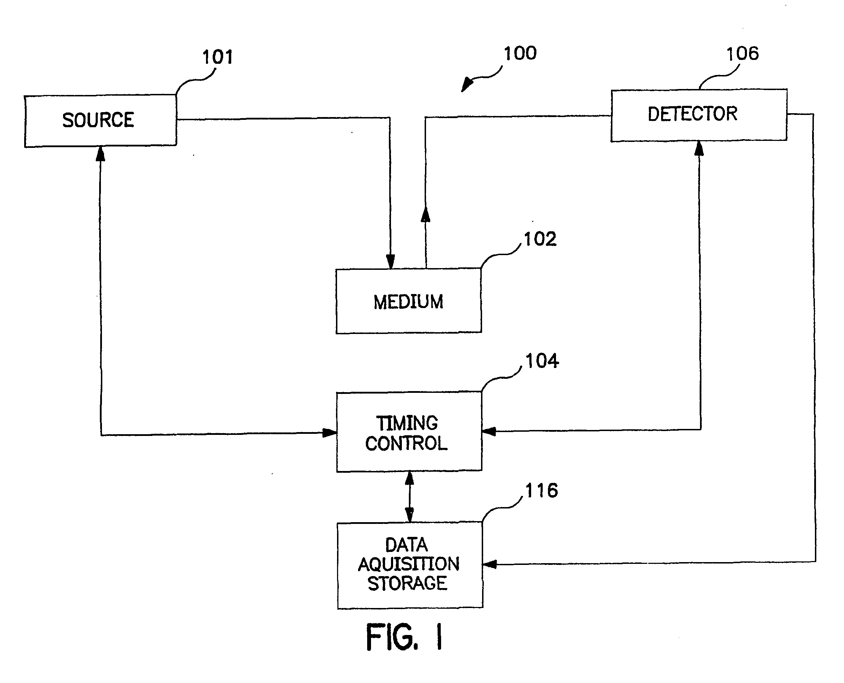

FIG. 1 illustrates one embodiment of the invention. Shown is a system 100 comprising medium **102.** The medium can be any medium in which the propagation of the used source energy is strongly affected by scattering.

From a source module **101** energy is directed to the medium **102** from which the exiting energy is measured by means of detector **106,** further discussed below. As previously discussed, there is a variety of sources, media, and detectors that may be used with the principles of the present invention. The following is a discussion of a sampling of such elements with the intention to describe how the invention is realized. In no way are these examples meant, nor do they intend to limit the invention to these implementations. A variation of elements as described herein may also utilize the principles of the present invention.

Measurements of dynamics in the optical properties of the medium is accomplished by using optical source energy and performing rapid detection of the acoustic energy created by absorption processes in the medium. This can be implemented using both pulsed and harmonic modulated light sources, the latter allowing for lock-in detection. Detectors can be, but are not limited to, piezo-electric transducers such as PZT crystals or PVDF foils.

In another variant, a timing and control facility **104** is used to coordinate source and detector operation. This coordination is further described below. A device **116** provides acquisition and storage of the data measured by the detector **106.** Depending on the implementation, control and timing of the system's components is provided by a computer, which includes a central processor unit (CPU), volatile and non-volatile memory, data input and output ports, data and program code storage on fixed and removable media and the like. Each main component is described in greater detail below.

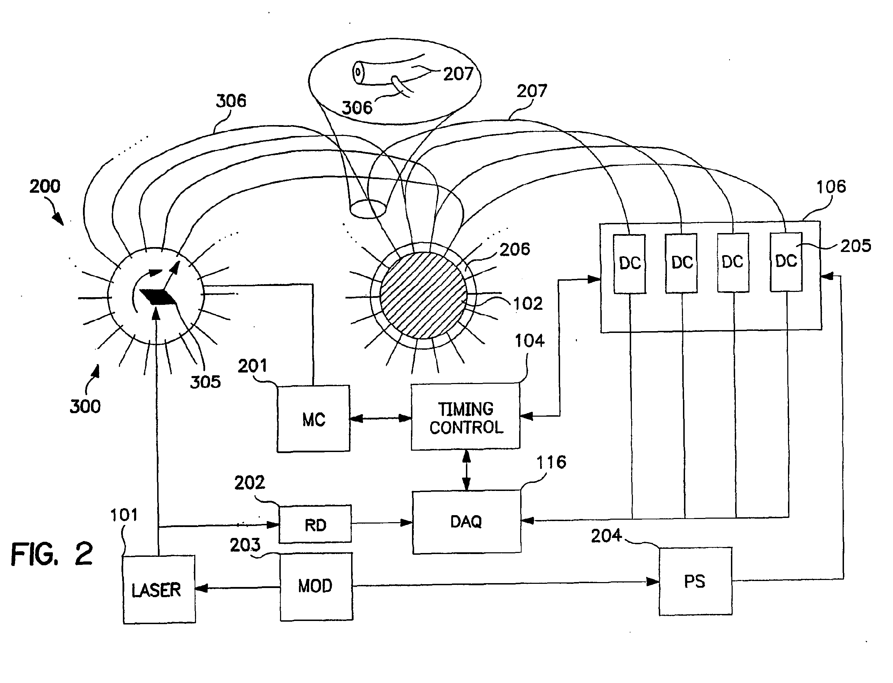

FIG. 2 illustrates an implementation of a preferred embodiment of the present invention. Shown is a system and method that incorporates at least one wavelength measurement. Depending upon the implementation, this measurement is accomplished by alternately coupling light from diode lasers into transmitting fibers arranged in a circular geometry.

Referring again to FIG. 2, a system **200** includes energy sources, which in this implementation includes one or more laser **101.** A reference detector **202** is used to monitor the actual output power of laser **101** and is coupled to a data acquisition unit **116.** Such laser may be a laser diode in the NIR region. The laser is intensity modulated by a modulation means **203** for providing means of separation of background energy sources such as daylight. The modulation signal is also send to a phase shifter **204** whose purpose is described further below. The light energy generated by the laser **101** is directed into an optical de-multiplexing device **300** further discussed in detail below. Using a rotating mirror **305,** the light is being directed into one of several optical source fiber bundles **306** that are used to deliver the optical energy to the medium **102.** To provide good optical contact and measurement fidelity, an imaging head **206** as described further below is used. A motor controller **201** is coupled to the de-multiplexing device **300** for controlling the motion of the rotating mirror **305.** The motor controller **201** is also in communication with a timing control **104** for controlling the timing of the motion of mirror **305.**

The measuring head **206** comprises the common end of a bifurcated optical fiber bundle, whose split ends are formed by the source fiber bundle **306** and detector fiber bundle **207.** Source fiber bundle **306** and detector fiber bundle **207** form a bulls eye geometry at the common end with the source fiber bundle in the center. In other embodiments, source and detector bundles are arranged differently at the common end (e.g., reversed geometry or arbitrary arrangement of the bundle filaments). The common end of a bifurcated optical fiber bundle, preferably comes in contact with the medium, however, this embodiment is not limited to contact with the medium. For example, the common ends may simply be disposed about the medium. The signal is transmitted from the detector fiber bundle **207** to a detector unit **106** that comprises at least one detector channel **205** further described herein.. The detector channel **205** is coupled to the data acquisition unit **116** and the timing control unit **104.** Depending on the implementation, a phase shifter **204** may or may not be used, and is coupled to the detector unit **106** for the purposes of providing a reference signal for the purposes of filtering the signal received from bundle **207.**

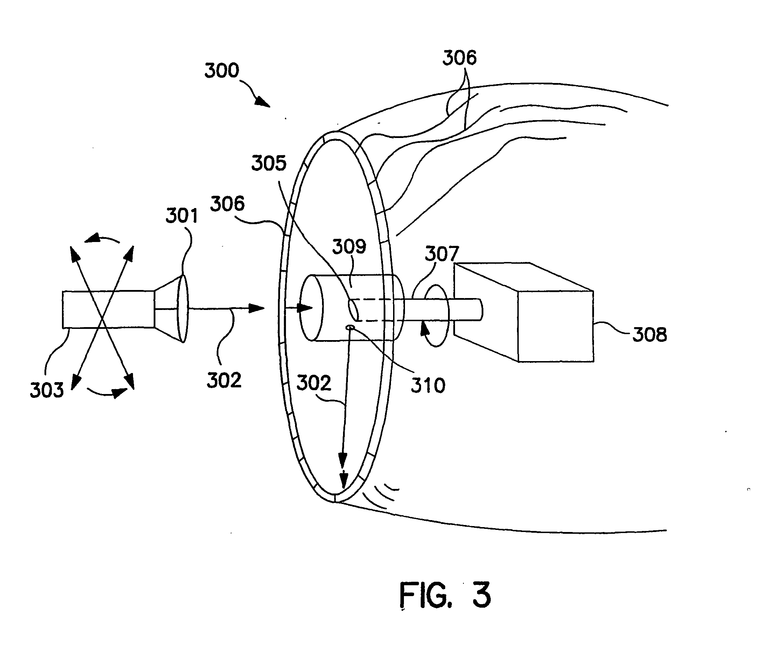

Depending on the implementation, illustrated in FIG. 3 is a device for the measurement of the dynamic properties of a scattering medium. This measurement is performed by sequentially reflecting light **302** off of a rotatable front surface mirror **306,** mounted at a 45 degree angle to the incident source, into source fibers **306** arranged in a circular geometry about the rotating optic. The rotation is done by a motor **308** with a shaft **307** to which the mirror is attached. This embodiment has an advantage of enabling fast switching among the transmitting fibers. In particular, it provides the ability to introduce beam shaping optics between the reflective mirror and transmitting fibers thereby allowing fine adjustment of the illumination area available for coupling into the fibers. This is useful because it allows independent adjustment of the rotation speed of the reflective optic (i.e., switching speed), and the illumination time allowed for each transmitting fiber bundle. Thus, a range of illumination frequencies can be employed while allowing fine adjustment of the illumination time at each source position to permit collection of data having a suitable signal-to-noise ratio.

Light from laser **101** is transmitted to unit **300** by means of transmitting optics **303** including, but not limited to, fiber optics and free propagating beams. Further beam shaping optics **301** may be used to optimize in -coupling efficiency into the transmitting fibers. Units **303** and **301** are under mechanical fine adjustment in their position with respect to the mirror **309.**

Motor **308** is operated under control of motion control **201** to allow for precise positioning and timing. By this means, it is possible to operate the motor under complex motion protocols such as in a start-stop fashion where the motor stops at a desired location thereby allowing the stable coupling of light into a transmitting fiber bundle. After the measurement at this source location is performed, the motor moves on to the next transmitting fiber. Motion control is in two-way communication with the timing control **104** thereby allowing precise timing of this procedure. Motion control allows the assignment of relative and/or absolute mirror positions allowing for precise alignment of the mirror with respect to the physical location of the fiber bundle. The mirror **306** is surrounded by a cylindrical shroud **309** in order to shield off stray light to prevent crosstalk. The shroud comprises an aperture **310** through which the light beam **302** passes toward the transmitting fiber. It is recognized and incorporated herein other schemes which may be used,(e.g., use of a fiber-optic switching device) to sequentially couple light into the transmitting fibers.

In an equivalent embodiment, fast switching of source positions is accomplished by using a number of light sources, each coupled into one of the transmitting fibers **306** which can be turned on and of each independently by electronic means.

The device employs the servo-motor control system **308** in FIG. 3 with beam steering optics, described above, to sequentially direct optical energy emerging from the source optics onto 1 mm diameter optical fiber bundles **306,** which are mounted in a circular array in the multiplexing input coupler **300.** The transmitting optical fiber bundles **306,** which are typically 2-3 meters in length are arranged in the form of an umbilical and terminate in the imaging head **206.**

Depending on the implementation, an apparatus required for time-series imaging, employs the value of using a geometrically adaptive measurement head or imaging head. The imaging head of the present invention provides features that include, but are not limited to, 1) accommodating different size targets (e.g., breast); 2) stabilizing the target against motion artifacts; 3) conforming the target to well-defined geometry; and 4) to provide exact knowledge of locations for sources and detectors. Stability and a known geometry both contribute to the use of efficient numerical analysis schemes.

There are several different imaging heads for data collection that may be used. For example the use of an iris imaging head previously disclosed in the '322 and '355 patents , may be used.

Described below are two imaging heads that provide the features previously described.

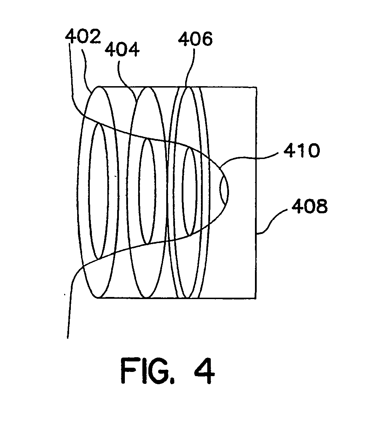

As illustrated in FIG. 4, the iris unit can be employed as a parallel array of irises **402, 404, 406** enabling volume imaging studies. FIG. 4 illustrates how this can be configured for studying a medium **410,** in this example a human breast, using an imaging head **408.** As described previously, the medium used in the present invention can be any medium, which allows scattering of energy.

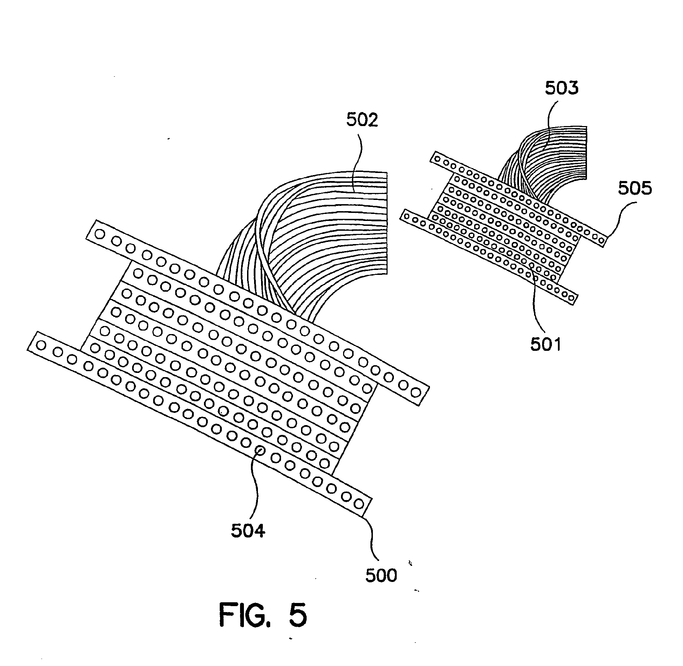

In one implementation of the imaging head illustrated in FIG. 5, is a flexible pad configuration. This planar imaging unit functions as a deformable array and is well suited to investigate body structures too large to permit transmission measurements (e.g., head and neck, torso, and the like). Using this type of imaging head, optical measurements are made in a back-reflection mode. Optical fiber bundles 502 originating from the optical multiplexing input coupler 112 (described elsewhere) terminate at the deformable array or flexible pad 500. The pad can be made of any flexible material such as black rubber or the like. The optical fiber bundles may be bifurcated and have ends 504 that both transmit and receive light. More than one pad may or may not be used, although an additional pad is not necessary, or for measurement application to other portions of the medium or to the same medium. For example, in the case of a breast exam, both pads maybe applied to the same breast having one pad above and one pad below the breast. In addition, one pad maybe applied to the right breast by having the pad deformed around the breast. Similarly, the other pad may be applied to the left breast. This configuration would allow both breasts to be examined at the same time. In addition, information may be correlation between the data collected from the two different members of the body. Again, the invention can be applied to other media and is not limited to portions of the human body. Thus, correlation between different media may be collected using this technique.

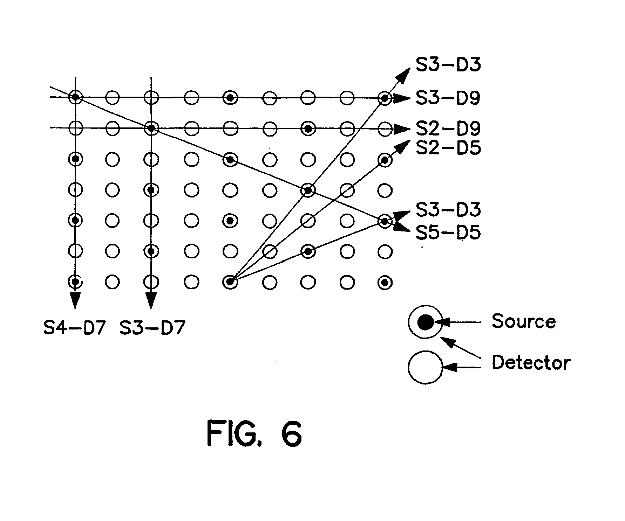

As further shown in Figure 5, the additional pad would have similar functions as the pad previously described and would have optical fiber bundles **503,** flexible pad **505,** and bifurcated optical fiber bundle ends **501** similar to the previous pad described. The array itself can be deformed to conform to the surface of a curved medium to be imaged (e.g. portion of the torso). The deformable array optical energy source and receiver design includes, depending on the implementation, a 7 x 9 array (63 total bundles) of optical fiber bundles as illustrated in FIG 6. In one variant, each bundle is typically 3 mm in diameter. Depending on the implementation, eighteen (18) of the sixty-three (63) fiber bundles may be arranged in an array to serve as both optical energy sources or energy transmitters, and receivers to sequentially deliver light to a designated target and receive emerging optical energy. In this implementation, the remaining forty-five (45) fiber bundles act only as receivers of the emerging optical energy.

The geometry of the illumination array is not arbitrary. The design shown in Figure 6 as an exemplary illustration has been configured, as have other implementations, to minimize the subsequent numerical effort required for data analysis while maximizing the source-density covered by the array. The fiber bundles are arranged in an alternating pattern as described by FIG. 6 and shown here with the symbols "X" and "0". In one implementation, a pattern of 00X000X00, X000X000X can be used on the imaging head. 'X' denotes a source/receiver fiber bundle, and '0' is a receiver only a receiver or detector fiber bundle. Basically, the design allows for the independent solution of two dimensional (2-D) image recovery problems from an eighteen (18) point source measurement. As a result, a composite three dimensional (3-D) image can be computed from superposition of the array of 2-D images oriented perpendicular to the target surface. Another advantage of this geometry is that it readily permits the use of parallel computational strategies without having to consider the entire volume under examination.

The advantage of this geometry is that each reconstruction data set is derived from a single linear array of source-detector fibers, thereby enabling solution of a 2-D problem without imposing undue physical approximations. The number of source-detector fibers belonging to an array can be varied. Scan speeds attainable with the 2-D array illustrated in FIG 6 are the same as for other imaging heads with 2-D arrays since the scan speed depends only on the properties of the input coupler. Thus, faster scan speed are available for the creation of a 3-D image.

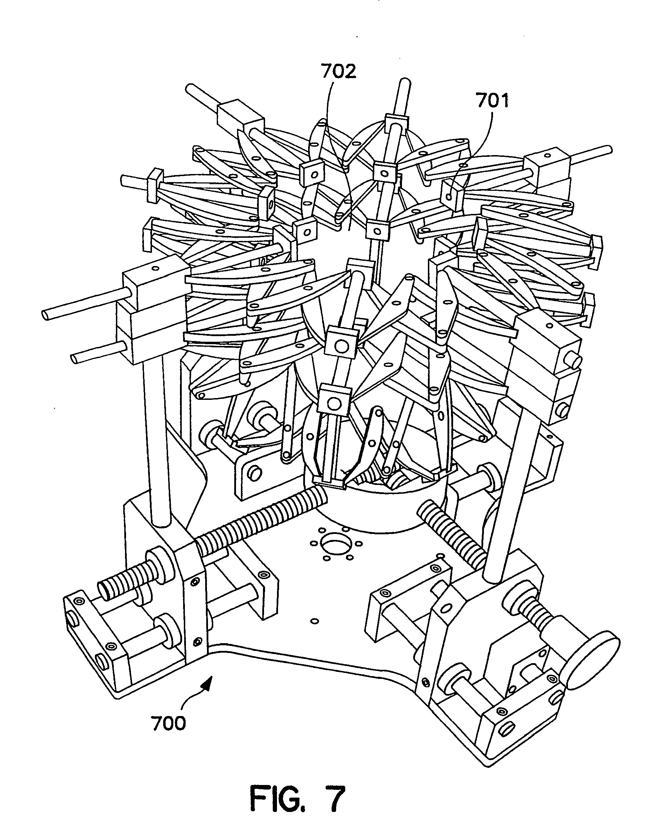

In the present invention, the imaging head is based on a "Hoberman" sphere geometry as illustrated in FIG. 7. In a Hoberman structure, the geometry is based on the intersection of a cube and an octahedron, which makes a folding polyhedron called a trapezoidal icosatetrahedron. This structure has been modified and implemented in a form of an imaging head of a hemispherical geometry. For many purposes of the instant invention, it is appropriate to use design features of smoothly varying surfaces based on the Hoberman concept of expanding structures. Depending on the implementation, other polygonal or spherical-type shapes may also be used which however are preferred by the present invention. Adjustment of the device in Figure 7 causes uniform expansion or contraction, thereby always preserving a hemispherical geometry. Imaging head **700** illustrates one example of modification to the "Hoberman" geometry. A receptacle for the fiber bundles **701** is disposed about imaging head **700.** Target volume **702** is where the medium would enter the imaging head in this implementation. This geometry is well suited for the investigation of certain tissues such as the female breast or the head. Depending on the implementation, attachment of optical fibers to the vertices of the hemisphere allows for up a seventeen (17) source by seventeen (17) detector measurement. The detectors or energy receivers may be disposed about the spherical imaging head and the detectors are located on the inner aspect of the expanding imaging head. Additional fiber bundles can be attached to the interlocking joints, permitting up to a 49 source by 49 detector measurement.

Depending on the implementation, light collected from the target medium is measured by using any of a number of optical detection schemes. One embodiment uses a fiber-taper, which is bonded to a charged coupled detector (CCD) array. The front end of the fiber taper serves to receive light exiting from the collection fibers. These fibers are preferably optical fibers, but can be any means that allows the transmission and reception of signals. The back end of the fiber taper is bonded to a 2-D charge-coupled-detector (CCD) array. In practice, use of this approach generally will require an additional signal attenuation module.

An alternate detection scheme employs an array of discrete photo detectors, one for each fiber bundle. This unit can be operated in a phase lock mode thereby allowing for improved rejection of ambient light signals and the discrimination of multiple simultaneously operated energy sources.

In another embodiment, in order to fulfill the demands posed by the desired physiological studies on the instrument, the following features characterize the detector system: scalable multi-channel design (up to 32 detector channels per unit); high detection sensitivity (below 10 pW); large dynamic range (1:10⁶ minimum); multi-wavelength operation; ambient light immunity; and fast data acquisition (order of 100 Hz all-channel simultaneous capture rate).

To achieve this, the detector system uses photodiodes and a signal recovering technique involving electronic gain switching and phase sensitive detection (lock-in amplification) for each detector fiber (in the following referred to as detection or detector channels) to ensure a large dynamic range at the desired data acquisition rate. The phase sensitive signal recovery scheme not only suppresses electronic noise to a desired level but also eliminates disturbances given by background light and allows simultaneous use of more than one energy source. Separation of signals from simultaneously operating sources is achieved, as the different signals are encoded in sufficiently separated modulation frequencies. Since noise reduction techniques are based on the reduction of detection bandwidth, the system is designed to maintain the desired rate of measurements. In order to achieve a timing scheme that allows simultaneous readout of the channels, a sample-and-hold circuit (S/H) is used for each detection channel output. The analog signals provided by the detector channels are sampled, digitized and stored using the data acquisition system **116.** One aspect is the flexibility and scalability of the detection instrument. Not only are the detector channels organized in single, identical modules, but also the phase detection stages, each containing two lock-in amplifiers, are added as cards. In this way, an existing setup can easily be upgraded in either the number of detector channels and/or the number of wavelengths used (up to four) by cloning parts of the existing hardware.

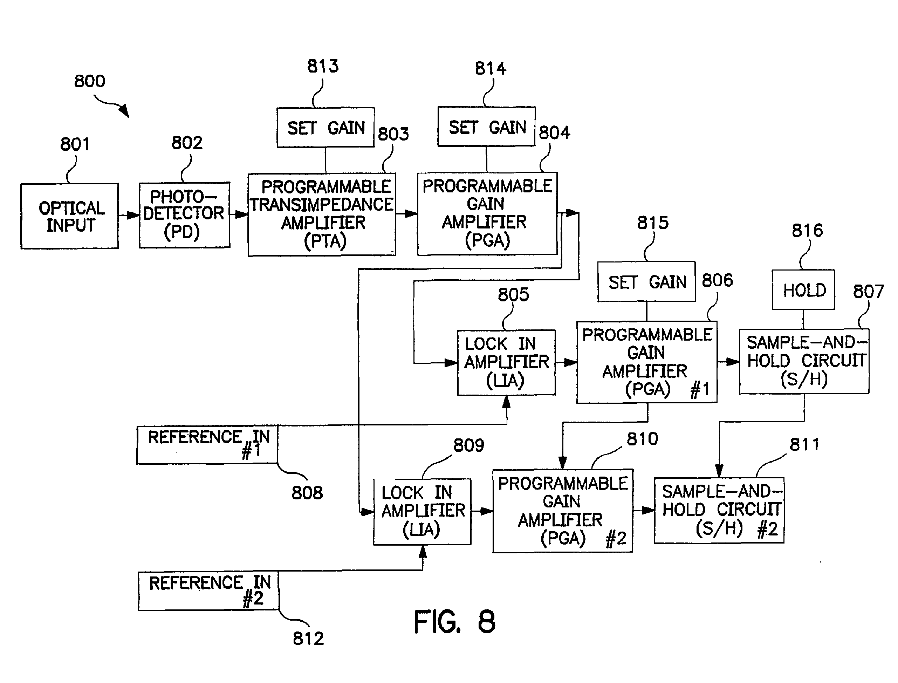

FIG. 8 shows the block diagram of one implementation of a detector channel. In this implementation , two energy sources are being used. After detecting the light at the optical input **801** by a photo detector **802** the signal is fed to a transimpedance amplifier **803.** The transimpedance value of **803** is externally settable by means of digital signals **813** (PTA=Programmable Transimpedance Amplifier). This allows the adaptation to various signal levels thereby increasing the dynamic range of the detector channel. The signal is subsequently amplified by a Programmable Gain Amplifier (PGA) whose gain can be set externally by means of digital signals **814.** This allows for additional gain for the lowest signal levels (e.g., in one implementation ~pW-nW) thereby thereby increasing the dynamic range of the detector channel.

At least one energy source is used and the signal is sent to at least one of lock-in amplifiers (LIA) **805, 809.** Each lock-in amplifier comprises an input **808,812** for the reference signal generated by phase shifter **204** from FIG 2. After lock-in detection, the demodulated signal is appropriately boosted in gain by means of a programmable gain amplifier (PGA) **806, 810** in order to maximize noise immunity during further signal transmission and to improve digital resolution when being digitized. The gain of PGA **806, 810** is set by digital signals **815.**

At each output, a sample-and-hold circuit (S/H) **807, 811** is used for freezing the signal under digital timing by means of signal **816** for purposes described herein.

The signal **815** can be sent to **806, 810** in parallel. The signal **816** can be sent to **807, 811** in parallel.

As previously illustrated in FIG. 1, the analog signal provided by each of the channel outputs is sampled a data acquisition system **116.** In one embodiment, PC extension boards might be used for this purpose. PC extension boards also provide the digital outputs that control the timing of functions such as gain settings and sample-and-hold.

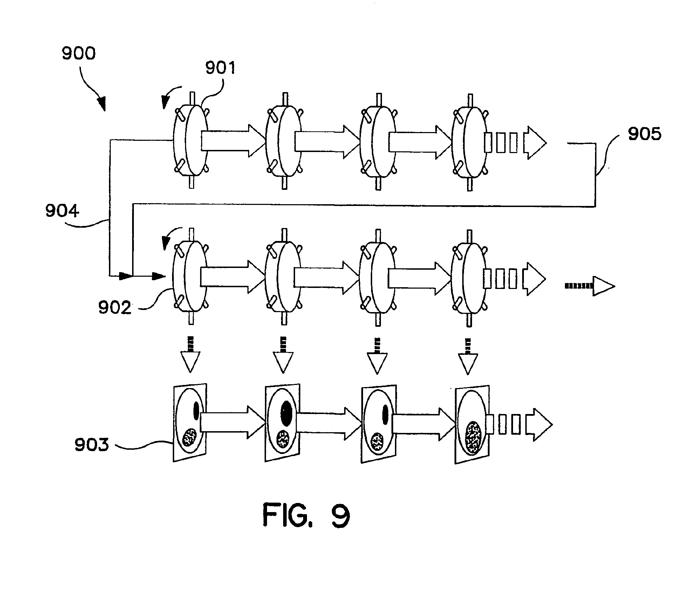

As previously noted, timing is crucial in order to provide the desired image capture rate and to avoid false readings due to detector-to-detector time skew. FIG. 9 shows a timing scheme. With systems not comprising fast adaptable gain settings (such as some CCD based systems), a schedule according to **905** has to be implemented. The implementation in FIG 9 illustrates one use of a silicon photo-diode in process **904,** which can be replaced by various detectors previously mentioned. A time series of data is acquired for a fixed source position. After finishing this task, the source is being moved **902** with respect to the target **901** and another series of data is being collected. Measurements are being performed in this fashion for all source positions. Every image **903** of the resulting time series of reconstructed images are being reconstructed from data sets merged together from the data for each source position. This schedule does not allow real-time capture of all physiologic processes in the medium and therefore only applies to certain modes of investigation. Although we are aware of the use of such schemes, e.g., when monitoring responses on repeatable maneuvers, the timing scheme for the invention very much improves on this situation.

Because of fast source switching and large dynamic range and high data acquisition rates, a schedule indicated by **904** can be performed. Here, the source position is switched fast compared to the dynamic features of interest and instantaneous multi-channel detection is performed at each source position. Images **903** are then reconstructed from data sets, which represent an instant state of the dynamic properties of the medium. Only one time series of full data sets (i.e., all source positions and all detector positions) is being recorded. Real time measurement of fast dynamics (e.g., faster 1 Hz) of the medium is provided by the invention.

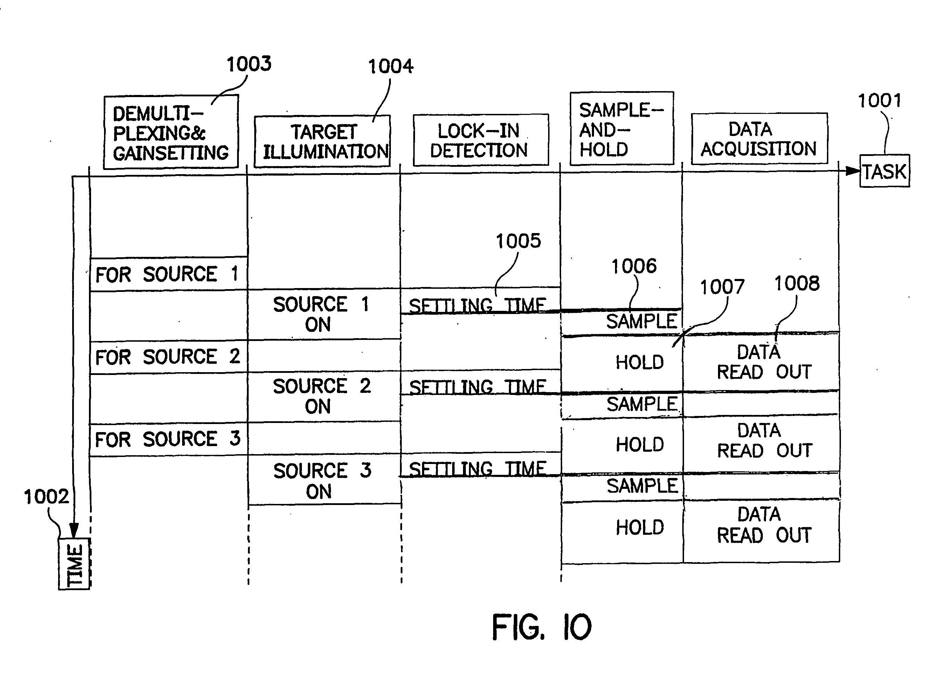

FIG 10 shows a detailed schedule and sequence of system tasks **1001** involved in collecting data at a source position and the proceeding of this process in time **1002.** Task **1003** is the setting of the optical de-multiplexer to a destined source position and setting the detectors to the appropriate gain settings. The source position is illuminated for a period of time **1004,** during which the lock-in amplifiers settle **1005.** After the time it takes the S/H to sample the signal **1006,** the signal is being hold for a period of time **1007,** during which all channels are being read pout by the data acquisition. It is worthwhile noticing that during reading out the S/H, other tasks, like moving the optical source, setting the detector gains for the new source position, and settling of the lock-in, are being scheduled. This increases greatly the achievable data acquisition rate of the instrument.

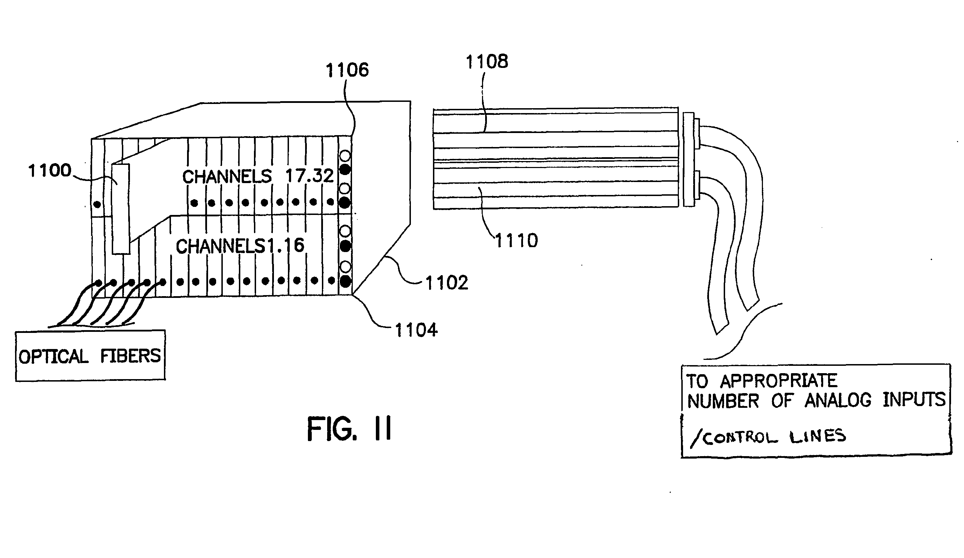

This concept of a modular system is further illustrated in FIG. 11. Up to thirty-two (32) detector modules **1100** (each with 2 lock-in modules each for two modulation frequencies) are arranged using an enclosure **1102.** The cabinet also can carry up to two phase shifting modules **1104, 1106,** each containing two digital phase shifter under computer control. The ability to adjust the reference phase with respect to the signal becomes necessary since unavoidable phase shifts in the signal may lead to non-optimum lock-in detection or can even result in a vanishing output signal. Organization of data, power supply and signal lines is provided by means of two back planes **1108, 1110**

Depending on the implementation, the detector system design illustrated in FIG. 8 allows one cabinet to operate at a capacity of 32 detectors with four different sources requiring 128 analog to digital circuit (ADC)-board input channels. The upper **1108** and the lower **1110** back plane are of identical layout and have to be linked in order to provide the appropriate distribution of supply-, control- and signal voltages. This is achieved using a 6U-module fitting both planes from the backside, that provides the necessary electric linking paths, and interfaces for control- and signal lines.

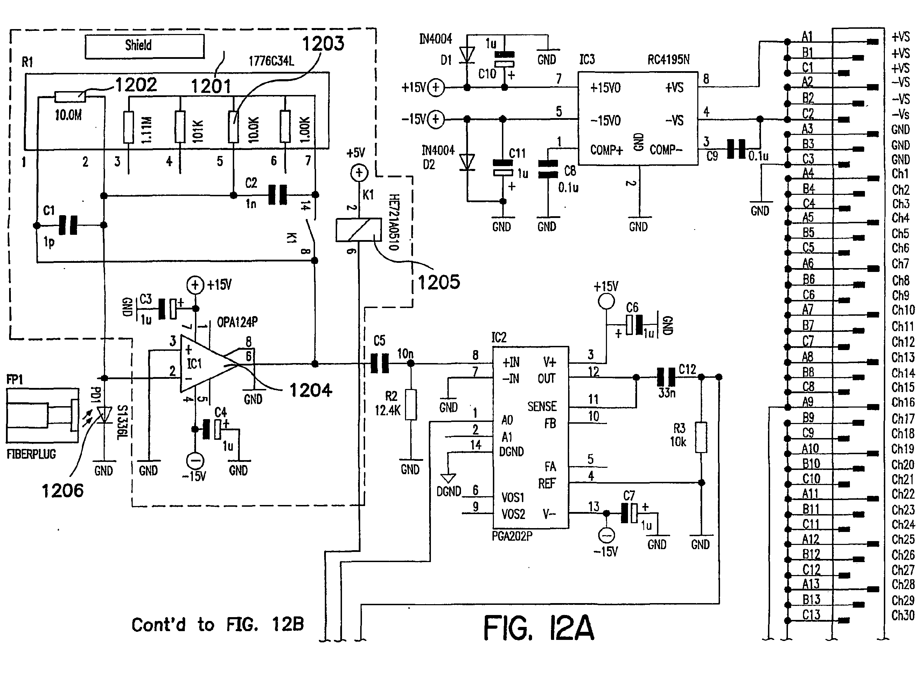

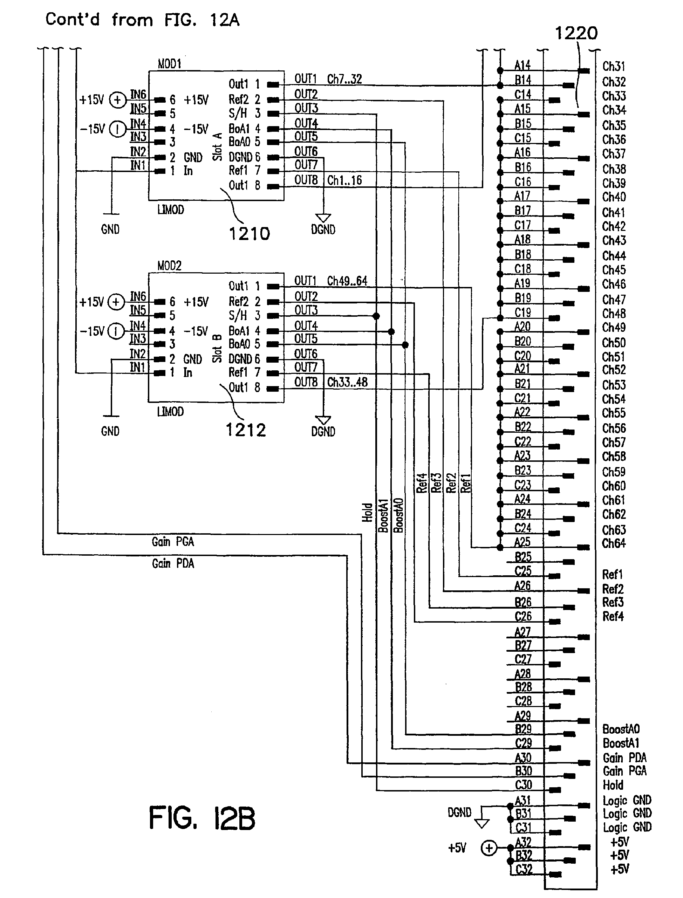

FIG. 12 shows the schematic of one implementation of a channel module. In this implementation, a silicon photodiode 1206 is used as the photo-detector. A Programmable Transimpedance Amplifier (PTA) **1201** is formed by an operational amplifier **1204,** resistors **1201** and **1202** and an electronic switch **1205,** the latter of which is realized using a miniature relay. Other forms of electronic switches such as analog switches might be used. Relay **1205** is used to connect or disconnect 1203 from the circuit thereby changing the transimpedance value of **1201.** A high-pass filter (R2, C5) is used to AC-couple the subsequent programmable gain instrumentation amplifier **IC2** (Burr Brown PGA202) in order to remove DC offset. The board-to-board connectors for the two lock-in-modules are labeled as "slot A" **1210** and "slot B" **1212.** The main connector to the backplane is a 96-pole DIN plug **1220.**

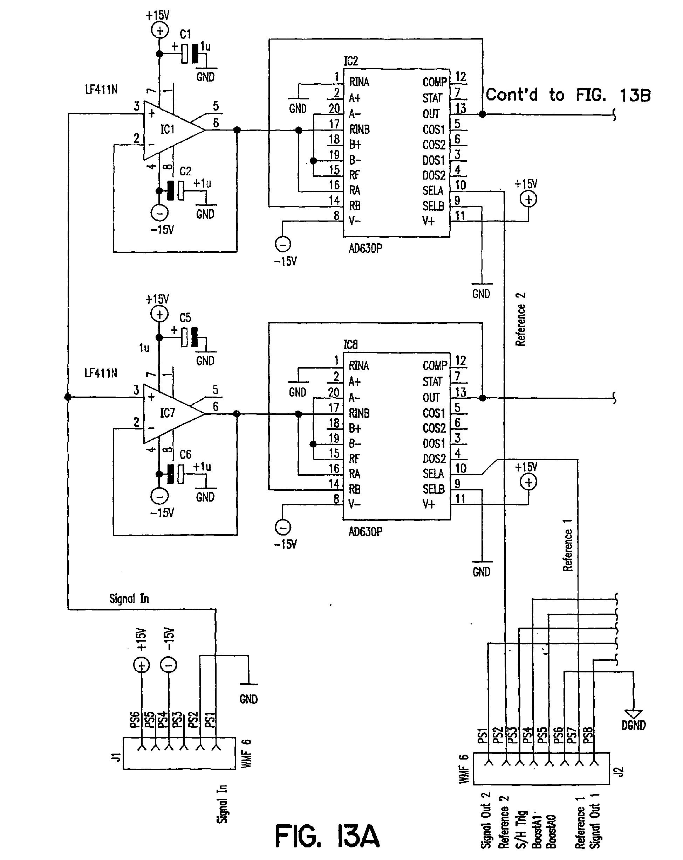

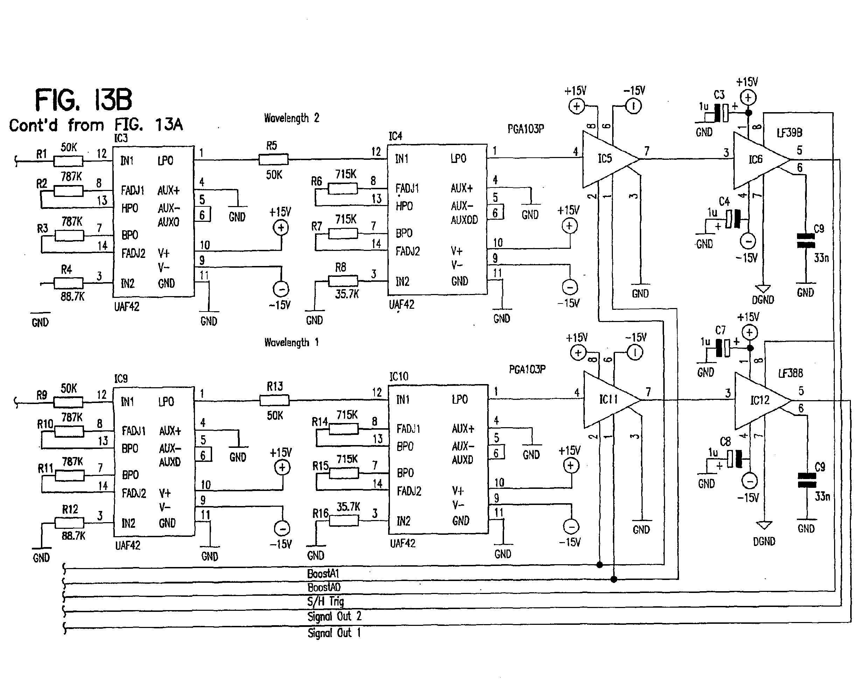

FIG. 13, illustrates the electric circuit of the lock in modules **1210, 1212.** The signal is subdivided and passed to two identical lock-in-amplifiers, each of which gets one particular reference signal according to the sources used in the experiment. The signal is first buffered **IC1**, **IC7** (AD LF111) and then demodulated using an AD630 double-balanced mixer **IC2, IC8.**

In order to remove undesired AC components, the demodulated signal passes through an active 4-pole Bessel-type filter **IC3, IC4**, **IC 9, IC10** (Burr Brown UAF42). A Bessel-type filter has been chosen in order to provide fastest settling of the lock-in amplifier for a given bandwidth. Since a Bessel-filter shows only slow stopband-transition, a 4-pole filter is being used to guarantee sufficient suppression of cross talk between signals generated by different sources (i.e. of different modulation frequency). The filter has its 3 dB point at 140 Hz, resulting in 6 ms settling time for a step response (<1% deviation of actual value). The isolation of frequencies separated by 1 kHz is 54 dB. The filters are followed by a programmable gain amplifier **IC5, IC 11,** whose general function has been described above. The last stage is formed by a sample-and-hold chip (S/H) **IC6, IC12** (National LF3.98).

In another implementation, the phase sensitive detection can be achieved with digital methods using digital signal processing (DSP) components and algorithms. The advantage of using DSP with the principles of the present invention is improved electronic performance and enhanced system flexibility.

In another implementation, an analog-to-digital converter is used for each detector channel thereby improving noise immunity of the signals.

Although illustrative embodiments have been described herein in detail, those skilled in the art will appreciate that variations may be made. The invention is defined in the following claims.

## Claims

1. A system for use in tomographic imaging of a scattering medium, comprising:
multiple energy sources
for emitting a signal
and having a plurality of energy transmitters coupled thereto,
said multiple energy sources generating light
having different wavelengths and
configured to be used simultaneously to provide illumination;
said plurality of energy transmitters
for simultaneously coupling light from said multiple energy sources into said scattering medium;
an imaging head that contains means for positioning at least one source location and/or at least one detector location with respect to the medium, and which is configured as a Hoberman structure causing uniform expansion or contraction thereby always preserving hemispherical, geometry,
wherein the respective signals are scattered by the scattering medium and emerge from the scattering medium;
a plurality of detectors
coupled to the multiple energy sources, for measuring dynamic properties of the scattering medium,
and including a plurality of energy receivers to receive a signal from the scattering medium and to transmit it to an associated detector,
said plurality of detectors detecting the respective signals that emerge from the scattering medium;
wherein each transmittor and receiver comprises an optical fiber
means for separating signals from said plurality of detectors
based on modulation frequencies; and
means for generating a time series of images of the scattering medium
from said separated signals
using optical tomography for use in measuring time variation of dynamic properties of the scattering medium during a time period in a measurement.

2. The system of claim 1, wherein the plurality of the detectors further comprising at least one lock-in amplifier for separating a signal emitted by the multiple energy sources.

3. The system of claim 1, further comprising means for adjusting a gain of at least one of the plurality of detectors, when at least one of the plurality of detectors detects the respective signal from one of the multiple energy sources, according to a position of the one of the multiple energy sources.

4. The system of claim 1, further comprising at least one sample-and-hold circuit for freezing the respective signals detected by the detectors to enable a simultaneous readout of the respective signals detected by the detectors.

5. The system of claim 4, wherein the sample-and-hold circuit further includes logic for allowing simultaneous readout for each of said plurality of detectors.

6. The system of claim 1, wherein the multiple energy sources includes at least one of non-laser optical sources, LED and high-pressure incandescent lamp, laser diodes, solid state lasers, titanium-sapphire laser, ruby laser, dye laser, electromagnetic sources, acoustic energy, acoustic energy produced by optical energy, optical energy, and combinations thereof.

7. The system of claim 1, further comprising a programmable gain amplifier for increasing the dynamic range of the signal from the plurality of detectors, wherein the programmable gain instrumentation amplifier provides rapid data acquisition about the dynamic properties of the scattering medium.

8. The system of claim 7, further comprising an energy receiver that includes at least one of a photo-diode, PIN diode, Avalanche photodiodes, change couple device, change inductive device, photo-multiplier tubes, multi-channel plate, acoustic transducers, and any combinations thereof.

9. The system of claim 7, further including a sample-and-hold circuit coupled to the programmable gain instrumentation amplifier that allows simultaneous readout of a plurality of signals.

10. A method of imaging a scattering medium using the system of claim 1 comprising
generating a time series of images of the scattering medium
from said separated signals using optical tomography; and measuring time variation of dynamic properties of the scattering medium during a time period in a measurement.

11. The method of claim 10, wherein the scattering medium is vascular tissues.

12. The method of claim 10, further including separating via at least one lock-in amplifier a plurality of wavelengths within the respective signals.

13. The method of claim 10, further including collecting data from simultaneous readouts of the respective signals at said plurality of receiver fiber bundles.

14. The method of claim 10, further comprising:
amplifying the respective signals with a programmable gain amplifier;
providing the amplified signal from the programmable gain amplifier to a computer having a data acquisition board; and
reconstructing an image of the medium employing the computer.

15. The system of claim 8, wherein the energy receiver detects fluorescence radiation excited by the multiple energy sources.

16. The system of claim 1, wherein said light is coupled to source fiber bundles in a patterned array.

17. The system of claim 16, wherein said multiple energy sources include a plurality of light sources, each coupled to one of said source fiber bundles.

18. The method of claim 10, wherein said light is coupled to source fiber bundles in a patterned array.

19. The method of claim 18, wherein said multiple energy sources include a plurality of light sources, each coupled to one of said source fiber bundles.

## Patentansprüche

1. System zur Verwendung für eine tomographische Bilddarstellung eines streuenden Mediums, umfassend:
mehrere Energiequellen
zum Emittieren eines Signals
und mit einer Vielzahl von damit verbundenen Energietransmittern,
wobei die mehreren Energiequellen Licht erzeugen
mit unterschiedlichen Wellenlängen und
derart ausgebildet sind, dass sie simultan verwendet werden können, um eine Illumination bereitzustellen;
wobei die Vielzahl der Energietransmitter ausgelegt ist,
um simultan Licht von den mehreren Energiequellen in das streuende Medium zu koppeln;
einen Abbildungskopf, der Mittel zur Positionierung wenigstens eines Quellenortes
und/oder wenigstens eines Detektorortes in Bezug auf das Medium beinhaltet und der als eine Hobermanstruktur konfiguriert ist, die eine gleichmäßige Expansion oder Kontraktion bewirkt und dadurch immer eine halbkugelförmige Geometrie wahrt,
wobei die entsprechenden Signale durch das streuende Medium gestreut werden
und aus dem streuenden Medium austreten;
eine Vielzahl von Detektoren,
die mit den mehreren Energiequellen verbunden sind,
und zwar zur Messung der dynamischen Eigenschaften des streuenden Mediums,
und eine Vielzahl von Energieempfängern beinhalten, um ein Signal vom streuenden Medium zu empfangen und es an einen verbundenen Detektor zu senden,
wobei die Vielzahl der Detektoren die jeweiligen Signale detektieren, die vom
streuenden Medium austreten;
wobei jeder Transmitter und Empfänger eine optische Faser umfasst;
ferner Mittel zum Trennen von Signalen von der Vielzahl der Detektoren
und zwar basierend auf Modulationsfrequenzen; und
Mittel zur Erzeugung einer Zeitreihe von Bildern des streuenden Mediums
von den separierten Signalen
unter Verwendung optischer Tomographie, die zur Messung der zeitlichen Veränderung von dynamischen Eigenschaften des streuenden Mediums während eines Zeitraums in einer Messung verwendet wird.

2. System gemäß Anspruch 1, wobei die Vielzahl der Detektoren weiterhin wenigstens einen Lock-In Verstärker zum Trennen eines durch die mehreren Energiequellen emittierten Signals, umfasst.

3. System gemäß Anspruch 1, das weiterhin Mittel zum Justieren eines Verstärkers von wenigstens einer der Vielzahl der Detektoren umfasst, wenn wenigstens einer der Vielzahl der Detektoren das entsprechende Signal von einer der mehreren Energiequellen gemäß einer der Position von einer der mehreren Energiequellen erfasst.

4. System gemäß Anspruch 1, das weiterhin wenigstens eine Abtast- und Halteschaltung zum Einfrieren der entsprechenden, durch die Detektoren detektierten Signale umfasst, um simultanes Auslesen der entsprechenden Signale durch die Detektoren zu ermöglichen.

5. System gemäß Anspruch 4, wobei die Abtast- und Halteschaltung weiterhin eine Logik beinhaltet, die das simultane Auslesen für jeden der Vielzahl der Detektoren erlaubt.

6. System gemäß Anspruch 1, wobei die mehreren Energiequellen entweder nichtlaseroptischen Quellen, LED und Hochdruck-Glühfadenlampen, Laserdioden, Festphasenlaser, Titan-Saphir-Laser, Rubin-Laser, Farbstofflaser, elektromagnetische Quellen, akustische Energie, durch optische Energie erzeugte akustische Energie, oder optische Energie einschließen oder Kombinationen davon.

7. System gemäß Anspruch 1, das weiterhin einen programmierbaren Verstärker zur Vergrößerung des dynamischen Bereichs des von der Vielzahl der Detektoren detektierten Signals umfasst, wobei der programmierbare Verstärker eine schnelle Datenerfassung über die dynamischen Eigenschaften des streuenden Mediums bereitstellt.

8. System gemäß Anspruch 7, das weiterhin einen Energieempfänger einschließt, der entweder eine Photodiode, eine PIN-Diode, Avalanche Photodioden, eine Ladungsträgergekoppelte-Einrichtung, eine Ladungsinjektions-Einrichtung, Photoelektronenvervielfacher-Röhren, eine Vielkanal-Sensorplatte, Akustikwandler oder Kombination davon.

9. System gemäß Anspruch 7, das weiterhin eine mit dem programmierbaren Verstärker verbundene Abtast- und Halteschaltung beinhaltet, die das simultane Auslesen einer Vielzahl von Signalen erlaubt.

10. Verfahren zur Darstellung eines streuenden Mediums unter Verwendung des Systems gemäß Anspruch 1, wobei das Verfahren umfasst
Erzeugen einer Zeitreihe von Bildern des streuenden Mediums
von den getrennten Signalen unter Verwendung optischer Tomographie; und
Messen der zeitlichen Veränderung der dynamischen Eigenschaften des streuenden Mediums während einer Zeitperiode in einer Messung.

11. Verfahren gemäß Anspruch 10, wobei das streuende Medium ein Leitgewebe ist.

12. Verfahren gemäß Anspruch 10, das weiterhin das Trennen einer Vielzahl von Wellenlängen in den entsprechenden Signalen mittels wenigstens eines Lock-In Verstärkers beinhaltet.

13. Verfahren gemäß Anspruch 10, das weiterhin das Sammeln von Daten von simultanen Auslesevorgängen der entsprechenden Signale an der Vielzahl von Empfängerfaserbündeln beinhaltet.

14. Verfahren gemäß Anspruch 10, das weiterhin umfasst:
Verstärken der entsprechenden Signale mit einem programmierbaren Verstärker;
Zuführen des vom programmierbaren Verstärker verstärkten Signals an einen Computer, der ein Datenerfassungsboard aufweist; und
Rekonstruieren eines Bildes des Mediums durch den Computer.

15. Verfahren gemäß Anspruch 8, wobei der Energieempfänger die durch die mehreren Energiequellen angeregte fluoreszierende Strahlung erfasst.

16. Verfahren gemäß Anspruch 1, wobei das Licht in einem gemusterten Feld mit den Quellfaserbündeln verbunden ist.

17. System gemäß Anspruch 16, wobei die mehreren Energiequellen eine Vielzahl von Lichtquellen beinhalten, die jeweils an eines der Quellfaserbündel gekoppelt sind.

18. Verfahren gemäß Anspruch 10, wobei das Licht in einem gemusterten Feld mit den Quellfaserbündeln verbunden ist.

19. Verfahren gemäß Anspruch 18, wobei die mehreren Energiequellen eine Vielzahl von Lichtquellen beinhalten, die jeweils an eines der Quellfaserbündel gekoppelt sind.

## Revendications

1. Système pour utilisation dans l'imagerie tomographique d'un milieu diffusant, comprenant:
des sources d'énergie multiples
pour l'émission d'un signal
et ayant une pluralité de transmetteurs d'énergie qui y sont couplés,
lesdites sources d'énergie multiples générant de la lumière
ayant différentes longueurs d'onde et
configurées pour être utilisées simultanément pour procurer une illumination;
ladite pluralité de transmetteurs d'énergie
étant destinée au couplage simultané de la lumière provenant desdites sources d'énergie multiples dans ledit milieu diffusant;
une tête d'imagerie qui contient des moyens pour le positionnement d'au moins un emplacement de source et/ou d'au moins un emplacement de détection par rapport au milieu, et qui est configurée comme une structure de Hoberman provoquant une expansion ou
une contraction uniforme, de manière à toujours maintenir ainsi une géométrie hémisphérique,
tandis que les signaux respectifs sont diffusés par le milieu diffusant et émergent du milieu diffusant;
une pluralité de détecteurs
couplés aux sources d'énergie multiples,
pour la mesure de propriétés dynamiques du milieu diffusant, et comprenant une pluralité de récepteurs d'énergie pour recevoir un signal provenant du milieu diffusant et pour le transmettre à un détecteur associé;
ladite pluralité de détecteurs détectant les signaux respectifs qui émergent du milieu diffusant ;
tandis que chaque transmetteur et récepteur comprend une fibre
optique
des moyens pour séparer les signaux de ladite pluralité de détecteurs
sur la base de fréquences de modulation; et
des moyens pour la génération d'une série chronologique d'images du milieu diffusant
à partir desdits signaux séparés
utilisant une tomographie optique pour utilisation dans la mesure de la variation temporelle de propriétés dynamiques du milieu diffusant pendant une période de temps dans une mesure.

2. Système selon la revendication 1, dans lequel la pluralité de détecteurs comprend en outre au moins un amplificateur à détection synchrone pour la séparation d'un signal émis par les sources d'énergie multiples.

3. Système selon la revendication 1, comprenant en outre des moyens pour l'ajustement d'un gain d'au moins l'un de la pluralité de détecteurs, lorsqu'au moins l'un de la pluralité de détecteurs détecte le signal respectif provenant de l'une des sources d'énergie multiples, conformément à une position de l'une des sources d'énergie multiples.

4. Système selon la revendication 1, comprenant en outre au moins un circuit d'échantillonnage-blocage pour figer les signaux respectifs détectés par les détecteurs afin de permettre une lecture simultanée des signaux respectifs détectés par les détecteurs.

5. Système selon la revendication 4, dans lequel le circuit d'échantillonnage-blocage comprend en outre une logique pour permettre la lecture simultanée pour chacun de ladite pluralité de détecteurs.

6. Système selon la revendication 1, dans lequel les sources d'énergie multiples comprennent au moins une parmi des sources optiques non-laser, LED et lampes à incandescence à haute pression, des diodes laser, des lasers à semi-conducteurs, un laser à titane-saphir, un laser à rubis, un laser à colorants, des sources électromagnétiques, l'énergie acoustique, l'énergie acoustique produite par l'énergie optique, l'énergie optique, et leurs combinaisons.

7. Système selon la revendication 1, comprenant en outre un amplificateur de gain programmable pour augmenter la dynamique du signal provenant de la pluralité de détecteurs, tandis que l'amplificateur de mesure à gain programmable procure une acquisition de données rapide sur les propriétés dynamiques du milieu diffusant.

8. Système selon la revendication 7, comprenant en outre un récepteur d'énergie qui comprend au moins l'un parmi une photodiode, une diode PIN, des photodiodes à avalanche, un dispositif à couple de modification, un dispositif inductif de modification, des tubes photomultiplicateurs, des plaques à canaux multiples, des transducteurs acoustiques, et n'importe quelle combinaison de ceux-ci.

9. Système selon la revendication 7, comprenant en outre un circuit échantillonneur-bloqueur couplé à l'amplificateur de mesure à gain programmable qui permet la lecture simultanée d'une pluralité de signaux.

10. Procédé pour procurer l'image d'un milieu diffusant utilisant le système selon la revendication 1, comprenant
la génération d'une série chronologique d'images du milieu diffusant
à partir desdits signaux séparés avec utilisation d'une tomographie optique; et
la mesure de la variation temporelle de propriétés dynamiques du milieu diffusant pendant une période de temps dans une opération de mesure.

11. Procédé selon la revendication 10, dans lequel le milieu diffusant est constitué par des tissus vasculaires.

12. Procédé selon la revendication 10, comprenant en outre la séparation via au moins un amplificateur à détection synchrone d'une pluralité de longueurs d'onde dans les signaux respectifs.

13. Procédé selon la revendication 10, comprenant en outre la collecte de données provenant de lectures simultanées des signaux respectifs sur ladite pluralité de faisceaux de fibres de récepteurs.

14. Procédé selon la revendication 10, comprenant en outre:
l'amplification des signaux respectifs avec un amplificateur à gain programmable;
la fourniture du signal amplifié provenant de l'amplificateur à gain programmable à un ordinateur ayant une carte de saisie de données; et
la reconstruction d'une image du milieu au moyen de l'ordinateur.

15. Système selon la revendication 8, dans lequel le récepteur d'énergie détecte le rayonnement de fluorescence excité par les sources d'énergie multiples.

16. Système selon la revendication 1, dans lequel ladite lumière est couplée à des faisceaux de fibres sources dans un arrangement configuré.

17. Système selon la revendication 16, dans lequel lesdites sources d'énergie multiples comprennent une pluralité de sources lumineuses, couplées chacune à l'un desdits faisceaux de fibres sources.

18. Procédé selon la revendication 10, dans lequel ladite lumière est couplée à des faisceaux de fibres sources dans un arrangement configuré.

19. Procédé selon la revendication 18, dans lequel lesdites sources d'énergie multiples comprennent une pluralité de sources lumineuses, couplées chacune à l'un desdits faisceaux de fibres sources.
